# EUROPEAN PATENT SPECIFICATION

(11) **EP 2 863 052 B1**
(45) Date of publication and mention of the grant of the patent: **07.12.2016**
(21) Application number: 14189249.7
(22) Date of filing: 16.10.2014
(51) Int. Cl.: F03D 1/06

(54) **Wind turbine rotor and wind turbine**
Windturbinenrotor und Windturbine
Rotor de turbine éolienne et éolienne

(30) Priority: 18.10.2013 JP 2013216970
(43) Date of publication of application: 22.04.2015
(73) Proprietor: MITSUBISHI HEAVY INDUSTRIES, LTD., Tokyo 108-8215 (JP); Euros Entwicklungsgesellschaft für Windkraftanlagen mbH, 13088 Berlin (DE)
(72) Inventor: Fukami, Koji, Tokyo, 108-8215 (JP); Klein, Christoph, 13088 Berlin (DE); Alwart, Jens, 13088 Berlin (DE); Graue, Hinrich, 13088 Berlin (DE); Shibata, Masaaki, Tokyo, 108-8215 (JP); Sato, Kenji, Tokyo, 108-8215 (JP); Hiraishi, Masayuki, Tokyo, 108-8215 (JP)
(74) Representative: Intès, Didier Gérard André

(56) References cited:
- KR-A- 20110 012 445
- US-A1- 2012 027 609
- US-A1- 2013 177 436

## Description

### [Technical Field]

The present disclosure relates to a wind turbine rotor and a wind turbine generator equipped with the wind turbine rotor.

### BACKGROUND ART

From the perspective of preserving the global environment, wind turbine generators which utilize wind energy have become popular in recent years. In a wind turbine generator, kinetic energy of wind is converted into rotational energy of a wind turbine rotor which includes a wind turbine blade and a hub, and this rotational energy is converted into electrical energy by a generator.

Patent Reference 1 discloses a technology regarding a wind turbine blade provided mainly for converting kinetic energy of wind into rotational energy of a wind turbine rotor efficiently and at low cost. An airfoil of this wind turbine blade includes a blade root region (20% - 50% radius from the center of rotation), an outboard region (50% - 80% radius from the center of rotation), and a blade tip region (80% - 100% radius from the center of rotation). The blade root region has a blade thickness ratio (a ratio of a maximum blade thickness to a chord length) of 24%. The outboard region has a thickness ratio of 21%. The blade tip region has a thickness of 16%.
Patent Reference 2 discloses a tip airfoil for the blade of a 2MW aerogenerator.

### [Citation List]

### [Patent Reference]

[Patent Reference 1] EP 0 675 285 B1
[Patent Reference 2] KR 2011 0012445

### SUMMARY

### [Technical Problem]

When designing an airfoil of a wind turbine blade, the higher the blade thickness ratio is set, the easier it is to reduce an aerodynamic load acting on the wind turbine blade from the wind by reducing the chord length. The higher the blade thickness ratio is, the easier it is to achieve high strength of the wind turbine blade by securing a distance between a suction side spar cap and a pressure side spar cap as main reinforcing materials of the wind turbine blade to obtain a high section modulus. Therefore, it is possible to reduce the weight load of the wind turbine blade by minimizing a usage amount of these spar caps (whose specific weight is relatively large among the parts used in the wind turbine blade).

Meanwhile, the higher the above blade thickness ratio is, the lower a lift/drag ratio of the airfoil becomes. Thus, the aerodynamic performance decreases without making ingenuity. The aerodynamic performance refers to a performance contributing to efficiency of converting the kinetic energy of the wind into the rotational energy of the wind turbine rotor.

The blade tip section whose ratio of the radial position to the radius of the wind turbine rotor is close to 1 (typically 0.7 or higher) has a small cross section compared to the blade root section, and its weight accounts for a small percentage to the entire wind turbine blade.

In recent years, however, a centrifugal force on the blade tip section is large due to increased wind turbine size. Regarding the airfoil applied to the blade tip section, it has been found by the present inventors that it is needed to reduce the weight load by another method in addition to adjusting of the blade thickness ratio.

In this regard, Patent Reference 1 discloses that the blade thickness ratio is in a rage of 16% - 24%. However, there is no discloser as to a method of reducing the weight load of the blade tip section other than adjusting of the blade thickness ratio.

It is an object of some embodiments of the present invention to provide a wind turbine rotor comprising a wind turbine which is capable of suppressing an increase in an aerodynamic load on the wind turbine blade from wind, suppressing a decrease in an aerodynamic performance and suppressing increase in a weight load of the wind turbine blade by reducing a usage amount of a spar cap needed to achieve a desired section modulus.

### [Solution to Problem]

A wind turbine rotor according to the present invention is defined in claim 1. The rotor comprises a wind turbine blade:
(1) the wind turbine blade comprises: at least one suction side spar cap extending in a longitudinal direction of the wind turbine blade on a suction side of the wind turbine blade; at least one pressure side spar cap extending in the longitudinal direction on a pressure side of the wind turbine blade; and at least one shear web extending in the longitudinal direction between the at least one suction side spar cap and the at least one pressure side spar cap, wherein the wind turbine blade includes a blade tip section whose ratio r/R of a radial position r in the wind turbine rotor to a radius R of the wind turbine rotor is 0.7 to 1.0, a region of the blade tip section has a cross section that accommodates the at least one suction side spar cap, the at least one pressure side spar cap and the at least one shear web, and at least a part of the region of the blade tip section has an airfoil satisfying all of conditions: (a) a blade thickness ratio of a maximum blade thickness tₘₐₓ to a chord length C is not less than 19% and not greater than 23%; (b) a Xₜₘₐₓ/C of Xₜₘₐₓ to C is not less than 0.28 and not greater than 0.32 where Xₜₘₐₓ is a chord-wise distance between a leading edge and a maximum thickness position and C is the chord length; and (c) a ratio t_{aft}/tₘₐₓ of t_{aft} to tₘₐₓ is not less than 0.51 and not greater than 0.56 where t_{aft} is a blade thickness at a midpoint on a chord between the maximum thickness position and a trailing edge.

According to the wind turbine blade descried in (1), by setting the blade thickness ratio representing the ratio of the maximum blade thickness tₘₐₓ to the chord length C to not less than 19% and not greater than 23% as described in the condition (a), compared to the wind turbine blade with the blade thickness ratio of less than 19%, it is easier to reduce the aerodynamic load on the wind turbine blade from the wind by reducing the chord length C. Further, compared to the small wind turbine blade with the blade thickness ratio of less than 19%, a spar cap distance between the spar caps is secured to increase a section modulus. This makes it easier to achieve high strength of the wind turbine blade. As a result, the spar caps functioning as reinforcing members (parts that are relatively heavy among parts used for the wind turbine blade) can be used less and thus, the weight load of the wind turbine blade can be reduced. With the configuration described in the condition (a), however, the lift/drag ratio of the airfoil becomes small compared to the wind turbine with the blade thickness ratio of less than 19%. Without ingenuity, this leads to the decline of the aerodynamic performance (performance contributing to the efficiency of converting the kinetic energy of the wind into the rotational energy of the wind turbine rotor).

In view of this, in the above wind turbine blade described in (1), in addition to the configuration described in the condition (a), the ratio Xₜₘₐₓ/C of the chord wise distance Xₜₘₐₓ to the chord length C is set, as described in the condition (b), not less than 0.28 and not greater than 0.32 so as to avoid the decline of the aerodynamic performance. Compared to the large blade with the Xₜₘₐₓ/C of greater than 0.32, the maximum thickness position in the airfoil is moved closer to the leading edge so as to increase the design lift coefficient and avoid the decline of the aerodynamic performance.

The blade tip section, whose ratio r/R of the radial position r in the wind turbine rotor to the radius R of the wind turbine rotor is 0.7 to 1.0, has a small cross section compared to the blade root section, and its weight accounts for a small percentage to the overall weight of the wind turbine blade.

Meanwhile, in the above wind turbine blade described in (1), in addition to the configuration described in the conditions (a) and (b), the ratio t_{aft}/tₘₐₓ of the blade thickness t_{aft} to the maximum blade thickness tₘₐₓ is set, as described in the above condition (c), to not less than 0.51 and not greater than 0.56. By setting the ratio t_{aft}/tₘₐₓ to not less than 0.51 and not greater than 0.56, it is possible to reduce the weight load of the wind turbine blade, while considering the aerodynamic performance, by reducing the usage of the spar caps which sandwich at least one shear web (particularly the shear web on the trailing edge side if two or more shear webs are provided).

As described above, according to the above wind turbine blade described in (1), even if the wind turbine blade is increased in size, it is possible to suppress the increase in the aerodynamic load acting on the wind turbine blade from the wind, to suppress the decrease in the aerodynamic performance and also to suppress increase in the weight load of the wind turbine blade by reducing the usage amount of the spar caps needed to achieve a desired section modulus.

In the wind turbine blade described in (1), to reduce the weight load of the wind turbine blade, the ratio t_{aft}/tₘₐₓ of the blade thickness t_{aft} to the maximum thickness tₘₐₓ is set, as described in the condition (c), not less than 0.51 and not greater than 0.56 so to increase the blade thickness in a region around the midpoint (in a region on the trailing edge side with respect to the maximum blade thickness position). According to the knowledge of the present inventors, in this type of airfoil, it is effective to move a concave surface region of the pressure side surface (a vicinity of the position where the second order differential d²y/dx² is the maximum in the negative direction), which contributes to the deflection angle, closer to the trailing edge.

In some embodiments, the above wind turbine blade described in (1) is configured such that
(2) the profile of the pressure side surface of the airfoil has an inflection point where the second order differential d²y/dx² becomes zero in a range of x=0.60 to 0.70 ,where x is a ratio X/C of X to C, X being a chord-wise distance from the leading edge, C being the chord length C and y is a ratio Y/C of Y to C, Y being a position coordinate of the pressure side surface in a blade thickness direction with a reference being the chord, C being the chord length at a position of the chord-wise distance X from the leading edge.

According to the wind turbine blade described in (2), by setting a lower limit of the inflection point x where the second order differential d²y/dx² becomes zero to 0.60, it is easy to make the ratio t_{aft}/tₘₐₓ not less than 0.51 and not greater than 0.56 as described in the condition (c). Further, by setting an upper limit of the inflection point position x where the second order differential d²y/dx² becomes zero to 0.70, it is easy to set the second order differential d²y/dx² at x=0.85 in the range described in (2) or (3).

In some embodiments, the above wind turbine blade described in (2) is configured such that
(3) the profile of the pressure side surface of the airfoil has an inflection point where the second order differential d²y/dx² becomes zero in a range of x=0.65 to 0.70.

According to the wind turbine blade described in (3), by setting a lower limit of the inflection point x where the second order differential d²y/dx² becomes zero to 0.65, it is easy to make the ratio t_{aft}/tₘₐₓ not less than 0.51 and not greater than 0.56 as described in the condition (c). Further, by setting an upper limit of the inflection point position x where the second order differential d²y/dx² becomes zero to 0.70, it is easy to set the second order differential d²y/dx² at x=0.85 in the range described in (2) or (3).

In some embodiments, the above wind turbine blade described in any one of (1) to (3) is configured such that
(4) the ratio t_{aft}/tₘₐₓ of the blade thickness t_{aft} to the maximum blade thickness tₘₐₓ in the airfoil, is not less than 0.52 and not greater than 0.54.

In some embodiments, the wind turbine blade described in any one of (1) to (3) is configured such that (4) a ratio t₆₀/tₘₐₓ of t₆₀ to tₘₐₓ is not less than 0.6, where t₆₀ is a blade thickness when x=0.60 and tₘₐₓ is the maximum blade thickness.

According to the wind turbine blade described in (4), compared to the case where the ratio t₆₀/tₘₐₓ is less than 0.6, the section modulus is increased by securing the spar cap distance. This makes it easier to achieve high strength of the wind turbine blade. As a result, the usage amount of the spar cap serving as the main reinforcing material is reduced and thus, the weight load of the wind turbine blade can be reduced.

In some embodiments, the wind turbine blade described in (4) is configured such that
(5) the ratio t₆₀/tₘₐₓ of t₆₀ to tₘₐₓ is not greater than 0.65, where t₆₀ is the blade thickness when x=0.60 and tₘₐₓ is the maximum blade thickness.

According to the wind turbine blade described in (5), compared to the case where the ratio t₆₀/tₘₐₓ is less than 0.65, the section modulus is increased by securing the spar cap distance. This makes it easier to achieve high strength of the wind turbine blade. As a result, the usage amount of the spar cap serving as the main reinforcing material is reduced and thus, the weight load of the wind turbine blade can be reduced.

In some embodiments, the wind turbine blade described in any one of (1) to (5) is configured such that
(6) a ratio t₅₅/tₘₐₓ of t₅₅ to tₘₐₓ is not less than 0.7, where t₅₅ is a blade thickness when x=0.55 and tₘₐₓ is the maximum blade thickness.

According to the wind turbine blade described in (6), compared to the case where the ratio t₅₅/tₘₐₓ is less than 0.7, the section modulus is increased by securing the spar cap distance. This makes it easier to achieve high strength of the wind turbine blade. As a result, the usage amount of the spar cap serving as the main reinforcing material is reduced and thus, the weight load of the wind turbine blade can be reduced.

The wind turbine blade described in any one of (1) to (6) is configured such that (7) the wind turbine rotor is at least 100 meters in diameter.

According to the wind turbine blade described in (7), even if the wind turbine blade is increased in size to 100 meters or more in diameter, it is possible to suppress the increase in the aerodynamic load acting on the wind turbine blade from the wind, to suppress the decrease in the aerodynamic performance and also to suppress increase in the weight load of the wind turbine blade by reducing the usage amount of the spar caps needed to achieve a desired section modulus.

According to the wind turbine blade described in (1) to (7), it is possible to achieve an efficient rotation of the wind turbine rotor by a high lift.

In some embodiments, a wind turbine generator according to some embodiments comprises:
(8) a wind turbine rotor comprising the wind turbine blade described in any one of claims (1) to (7); and
a generator configured to convert rotational energy of the wind turbine rotor into electrical energy.

According to the wind turbine generator described in (8), even if the wind turbine blade is increased in size, it is possible to suppress the increase in the aerodynamic load acting on the wind turbine blade from the wind, to suppress the decrease in the aerodynamic performance and also to suppress increase in the weight load of the wind turbine blade by reducing the usage amount of the spar caps needed to achieve a desired section modulus. Therefore, the increased size of the wind turbine blade not only enhances the power generation output but also enables efficient conversion of the wind power energy into electrical energy and further, the configuration of the structure (e.g. bearings) which receives the aerodynamic load and the weight load can be simplified.

### [Advantageous Effects]

According to some embodiments of the present invention, even if the wind turbine blade is increased in size, it is possible to suppress the increase in the aerodynamic load acting on the wind turbine blade from the wind, to suppress the decrease in the aerodynamic performance and also to suppress increase in the weight load of the wind turbine blade by reducing the usage amount of the spar caps needed to achieve a desired section modulus.

### BRIEF DESCRIPTION OF DRAWINGS

FIG.1 is a schematic illustration of a wind turbine generator according to some embodiments.
FIG.2 is a schematic oblique view of a wind turbine blade according to some embodiments.
FIG.3 is a schematic plan view of the wind turbine blade according to some embodiments.
FIG.4 is a schematic view of a typical section of a blade tip section according to some embodiments.
FIG.5 is an illustration of an airfoil defining a profile of a typical section of a blade tip section according to some embodiments.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

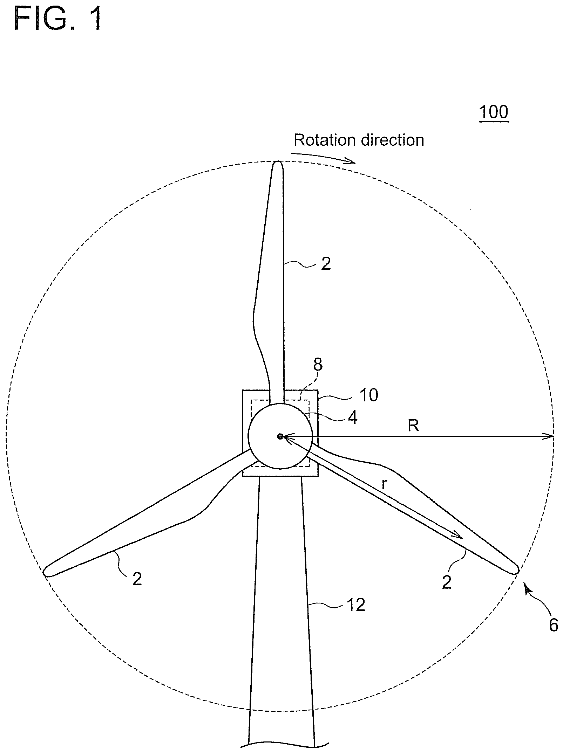

FIG.1 is a schematic illustration of a wind turbine generator 100 according to some embodiments.

The wind turbine generator 100 illustrated in FIG.1 comprises a wind turbine rotor 6 including at least one wind turbine blade 2 and a hub 4 where the wind turbine blade 2 is attached, a generator 8 for converting rotational energy of the wind turbine rotor 6 into electrical energy, a nacelle 10 for supporting the wind turbine rotor 6 and the generator 8, and a tower 12 for supporting the nacelle 10 rotatably. The wind turbine rotor 6 illustrated in FIG.1 as an example comprises three wind turbine blades 2. The diameter of the wind turbine rotor 6 is at least 100m in some embodiments.

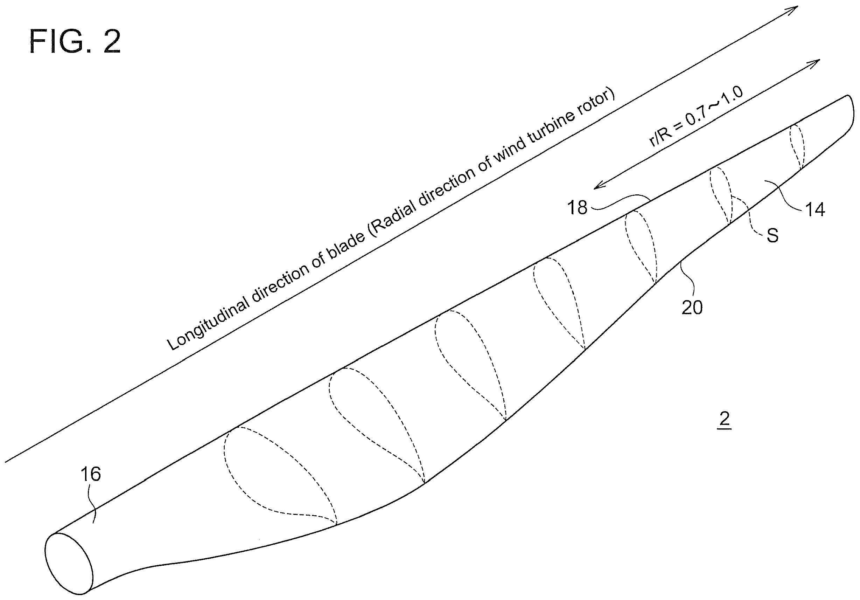

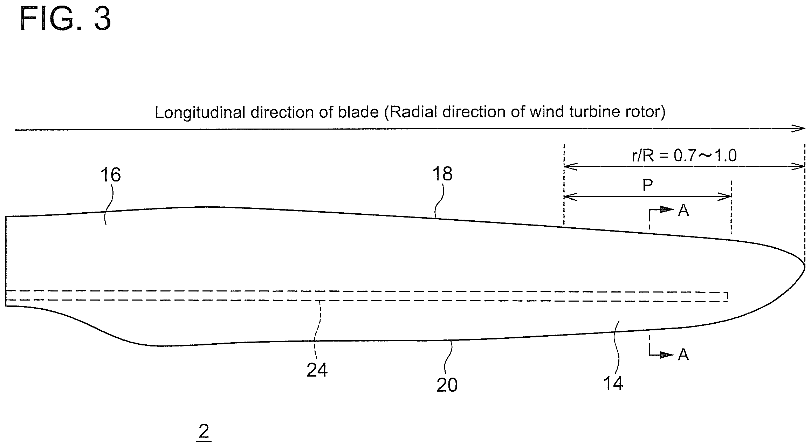

FIG.2 is a schematic oblique view of the wind turbine blade 2 according to some embodiments. FIG.3 is a schematic plan view of the wind turbine blade 2 according to some embodiments.

As illustrated in FIG.2 and FIG.3, the wind turbine blade 2 includes a blade tip section 14 and a blade root section 16 connected to the hub 4 (see FIG.1). Further, the wind turbine blade 2 comprises a leading edge 18 and a trailing edge 20 from the blade tip section to the blade tip section 14. Inside the wind turbine blade 2, at least one shear web (a leading edge shear web 22 and a trailing edge shear web 24 in the example illustrated in FIG.3) as a spar member. Here, the "blade tip section 14" indicates a region in the wind turbine blade 2, where a ratio r/R of a radial position r (a distance from the rotation center of the wind turbine rotor 6 in the radial direction) to a radius R of the wind turbine rotor 6 (see FIG.1) is 0.7 - 1.0.

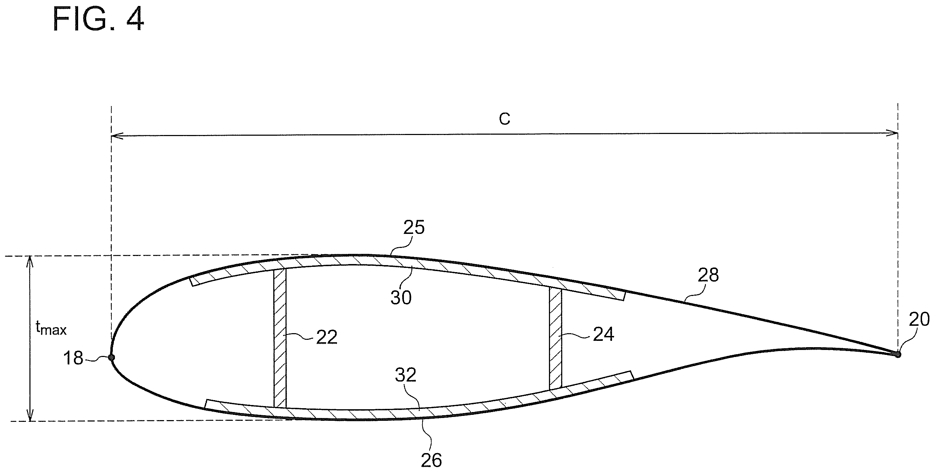

FIG.4 is a schematic view of a typical section S of the blade tip section 14 of FIG.2. The wind turbine blade 2, as illustrated in FIG.4, comprises an outer skin 28 forming a suction surface 25 and a pressure surface 26 of the wind turbine blade, a suction side spar cap 30 as a main reinforcing material, a pressure side spar cap 32 as a main reinforcing material, a leading edge side shear web 22 as a spar material, and a trailing edge side shear web 24 as a spar material.

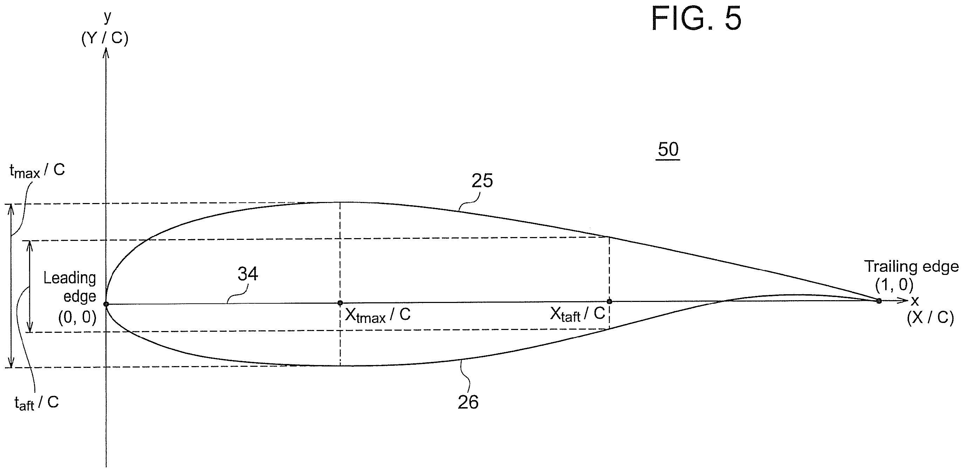

FIG.5 is an illustration of an airfoil 50 defining a profile of a typical section S of the blade tip section 14 (A-A section of FIG.3) illustrated in FIG.4. The wind turbine blade 2 includes the blade tip section 14 (where the ratio r/R 0.7 to 1.0), and a region P of the blade tip section 14 (see FIG.3) has a cross section that accommodates at least one suction side spar cap 30, at least one pressure side spar cap 32 and at least one shear web 24. Further, at least a part of the region P of the blade tip section 14 has an airfoil 50 satisfying the conditions described later.

The airfoil 50 illustrated in FIG.5 is a profile of the blade normalized in XY coordinates with a x direction being the chord direction and a y direction being the blade thickness direction, where the origin (0 , 0) is at the leading edge 18 and a point (1 , 0) is at the trailing edge 20. Specifically, in FIG.5, x is a ratio X/C of a chord-wise distance X from the leading edge 18 to the chord length C, and y is a ratio Y/C of a position coordinate Y in the blade thickness direction with a reference being the chord 34 to the chord length C at a position of the chord-wise distance X from the leading edge 18. The ratio Y/C, i.e. y, has a positive value on the suction side with respect to the chord 34 and has a negative value on the pressure side with respect to the chord 34.

The airfoil 50 illustrated in FIG.5 satisfies all of three conditions (a) to (c):
(a) a blade thickness ratio (tₘₐₓ/C in the xy coordinates of FIG.5) of the maximum blade thickness tₘₐₓ to the chord length C (1 in the xy coordinates of FIG.5) is not less than 19% and not greater than 23%;
(b) a ratio Xₜₘₐₓ/C of Xₜₘₐₓ to C is not less than 0.28 and not greater than 0.32 where Xₜₘₐₓ is a chord-wise distance between the leading edge and the maximum thickness position (Xₜₘₐₓ/C in the xy coordinates of FIG.5) and C is the chord length (1 in the xy coordinates of FIG.5); and
(c) a ratio t_{aft}/tₘₐₓ of t_{aft} to tₘₐₓ is not less than 0.51 and not greater than 0.56 where t_{aft} (T_{aft}/C in the xy coordinates of FIG.5) is the blade thickness at a midpoint Xtaft (Xtaft/C in the xy coordinates of FIG.5) on a chord (a blade chord line) 34 between the maximum thickness position (Xₜₘₐₓ/C in the xy coordinates of FIG.5) and the trailing edge.

With the above wind turbine blade 2, by setting the blade thickness ratio representing the ratio of the maximum blade thickness tₘₐₓ to the chord length C as described in the condition (a) to not less than 19% and not greater than 23%, the chord length C is reduced and the aerodynamic load on the wind turbine blade 2 from the wind can be reduced easily, compared to the wind turbine blade with the blade thickness ratio of less than 19%. Further, compared to the small wind turbine blade 2 with the blade thickness ratio of less than 19%, the spar cap distance (the distance between the suction side spar cap 30 and the pressure side spar cap 32) is secured to increase the section modulus. This makes it easier to achieve high strength of the wind turbine blade 2.

As a result, the spar caps 30, 32 functioning as reinforcing members which are relatively heavy parts among the parts used for the wind turbine blade can be used less and thus, the weight load of the wind turbine blade 2 can be reduced. However, with the configuration described in the condition (a), the lift/drag ratio of the airfoil becomes small compared to the wind turbine with the blade thickness ratio of less than 19%. Without ingenuity, this leads to the decline of the aerodynamic performance (performance contributing to the efficiency of converting the kinetic energy of the wind into the rotational energy of the wind turbine rotor).

In view of this, the airfoil 50 of the blade tip section 14, in addition to the configuration described in the condition (a), is configured, as described in the condition (b), such that the ratio Xₜₘₐₓ/C of Xₜₘₐₓ to C is not less than 0.28 and not greater than 0.32 where Xₜₘₐₓ is a chord-wise distance between the leading edge and the maximum thickness position and C is the chord length to avoid the decline of the aerodynamic performance. Compared to the blade with the Xₜₘₐₓ/C of greater than 0.32, the maximum thickness position is moved closer to the leading edge so as to increase the design lift coefficient and avoid decline of the aerodynamic performance.

More specifically, in addition to the configuration described in the conditions (a) and (b), the ratio t_{aft}/tₘₐₓ of the blade thickness t_{aft} to the maximum blade thickness tₘₐₓ is set, as described in the above condition (c), to not less than 0.51 and not greater than 0.56. By setting the ratio t_{aft}/tₘₐₓ to not less than 0.51 and not greater than 0.56, it is possible to reduce the weight load of the wind turbine blade 2, while considering the aerodynamic performance, by reducing the usage of the spar caps 30, 32 sandwiching the trailing edge side shear web 24.

In contrast, the following discovery was made by the present inventors. In the airfoil which satisfies both of the conditions (a) and (b) that, at the constant ratio t_{aft}/tₘₐₓ, the largest value of the maximum lift/drag ratios shows a trend different from "the decline of maximum lift/drag ratio according to the increase of t_{aft}/tₘₐₓ". More specifically, there is a region where the largest value increases as the ratio t_{aft}/tₘₐₓ increases, and the maximum lift/drag has the maximum in a range where the ratio t_{aft}/tₘₐₓ is 0.51 - 0.56. Further, as described above, the higher the ratio t_{aft}/tₘₐₓ is made, the higher the section modulus becomes, hence enhancing the structural strength. Therefore, if the ratio t_{aft}/tₘₐₓ is within the range where the ratio t_{aft}/tₘₐₓ is 0.51 - 0.56, it is possible to suppress the decline of the aerodynamic performance while realizing the high structural strength (i.e. reducing the usage amount of the spar caps on the suction side and the pressure side). Moreover, if the ratio t_{aft}/tₘₐₓ is within a range where the ratio t_{aft}/tₘₐₓ is 0.52 - 0.54, it is possible to further suppress the decline of the aerodynamic performance while realizing the high structural strength.

In the above airfoil as shown in Fig.5, a ratio t₆₀/tₘₐₓ of t₆₀ to tₘₐₓ is not less than 0.6, where t₆₀ is a blade thickness when x=0.60 and tₘₐₓ is the maximum blade thickness. As a result, compared to the case where the ratio t₆₀/tₘₐₓ is less than 0.6, the section modulus is increased by securing the spar cap distance. This makes it easier to achieve high strength of the wind turbine blade 2. As a result, the usage amount of the spar cap serving as the main reinforcing material is reduced and thus, the weight load of the wind turbine blade can be reduced. Further, for the similar reason, a ratio t₅₅/tₘₐₓ of t₅₅ to tₘₐₓ is not less than 0.7, where t₅₅ is a blade thickness when x=0.55 and tₘₐₓ is the maximum blade thickness. For the perspective of suppressing the decline of the aerodynamic performance, the ratio t₆₀/tₘₐₓ of t₆₀ to tₘₐₓ is preferably not greater than 0.65.

Thus, according to the wind turbine blade 2 described in reference to FIG.1 to FIG.5, even if the wind turbine blade is increased in size, it is possible to suppress the increase in the aerodynamic load acting on the wind turbine blade from the wind, to suppress the decrease in the aerodynamic performance and also to suppress increase in the weight load of the wind turbine blade 2 by reducing the usage amount of the spar caps 30, 32 needed to achieve a desired section modulus. Therefore, the increased size of the wind turbine blade 2 not only enhances the power generation output but also enables efficient conversion of the wind power energy into electrical energy and further, the configuration of the structure (e.g. bearings) which receives the aerodynamic load and the weight load can be simplified.

### [Reference Signs list]

- 2: Wind turbine blade
- 4: Hub
- 6: Wind turbine rotor
- 8: Generator
- 10: Nacelle
- 12: Tower
- 14: Blade tip section
- 16: Blade root section
- 18: Leading edge
- 20: Trailing edge
- 22: Leading edge side shear web
- 24: Trailing edge side shear web
- 25: Suction side surface
- 26: Pressure side surface
- 28: Outer skin
- 29: Concave surface region
- 30: Suction side spar cap
- 32: Pressure side spar cap
- 34: Chord
- 100: Wind turbine generator

## Claims

1. A wind turbine rotor (6) comprising a wind turbine blade (2), the wind turbine blade (2) comprising:
at least one suction side spar cap (30) extending in a longitudinal direction of the wind turbine blade (2) on a suction side of the wind turbine blade (2);
at least one pressure side spar cap (32) extending in the longitudinal direction on a pressure side of the wind turbine blade (2); and
at least one shear web (22, 24) extending in the longitudinal direction between the at least one suction side spar cap (30) and the at least one pressure side spar cap (32),
**characterized in that** the wind turbine rotor (6) is at least 100 meters in diameter, the wind turbine blade (2) includes a blade tip section (14) whose ratio r/R of a radial position r in the wind turbine rotor (6) to a radius R of the wind turbine rotor (6) is 0.7 to 1.00, a region of the blade tip section (14) has a cross section
that accommodates the at least one suction side spar cap (30), the at least one pressure side spar cap (32) and the at least one shear web, and at least a part of the region of the blade tip section (14) has an airfoil (50) satisfying all of conditions:
(a) a blade thickness ratio of a maximum blade thickness tₘₐₓ to a chord length C is not less than 19% and not greater than 23%;
(b) a Xₜₘₐₓ/C of Xₜₘₐₓ to C is not less than 0.28 and not greater than 0.32 where Xₜₘₐₓ is a chord-wise distance between a leading edge and a maximum thickness position and C is the chord length; and
(c) a ratio t_{aft}/tₘₐₓ of t_{aft} to the maximum blade thickness tₘₐₓ is not less than 0.51 and not greater than 0.56 where t_{aft} is a blade thickness at a midpoint on a chord (34) between the maximum thickness position and a trailing edge (20),
wherein said airfoil (50) and said cross section that accommodates the at least one suction side spar cap, the at least one pressure side spar cap and the at least one shear web are applied to the entire range of 0.80 to 0.95 of the ratio r/R.

2. The wind turbine rotor (6) according to claim 1, wherein the profile of the pressure side surface (26) of the airfoil (50) has an inflection point where the second order differential d²y/dx² becomes zero in a range of x=0.60 to 0.70, where x is a ratio X/C of X to C, X being a chord-wise distance from the leading edge (18), C being the chord length C and y is a ratio Y/C of Y to C, Y being a position coordinate of the pressure side surface (26) in a blade thickness direction with a reference being the chord (34), C being the chord (34) length at a position of the chord-(34) wise distance X from the leading edge (18).

3. The wind turbine rotor (6) according to claim 2,
wherein the profile of the pressure side surface (25) of the airfoil (50) has an inflection point where the second order differential d²y/dx² becomes zero in a range of x=0.65 to 0.70.

4. The wind turbine rotor (6) according to any one of claims 1 to 3,
wherein the ratio t_{aft}/tₘₐₓ of the blade thickness t_{aft} to the maximum blade thickness tₘₐₓ in the airfoil (50), is not less than 0.52 and not greater than 0.54.

5. The wind turbine rotor (6) according to any one of claims 2 to 4,
wherein a ratio t₆₀/tₘₐₓ of t₆₀ to tₘₐₓ is not less than 0.6, where t₆₀ is a blade thickness when x=0.60 and tₘₐₓ is the maximum blade thickness, wherein x is a ratio X/C of X to C, X being a chord-wise distance from the leading edge (18), C being the chord length C.

6. The wind turbine rotor (6) according to claim 5,
Wherein the ratio t₆₀/tₘₐₓ of t₆₀ to tₘₐₓ is not greater than 0.65, where t₆₀ is the blade thickness when x=0.60 and tₘₐₓ is the maximum blade thickness.

7. The wind turbine rotor (6) according to any one of claims 1 to 6,
wherein a ratio t₅₅/tₘₐₓ of t₅₅ to tₘₐₓ is not less than 0.7, where t₅₅ is a blade thickness when x=0.55 and tₘₐₓ is the maximum blade thickness.

8. A wind turbine generator (100) comprising:
the wind turbine rotor (6) described in any one of claims 1 to 7 ; and
a generator (8) configured to convert rotational energy of the wind turbine rotor (6) into electrical energy.

## Patentansprüche

1. Windkraftanlagenrotor (6), umfassend ein Windkraftanlagenrotorblatt (2), wobei das Windkraftanlagenrotorblatt (2) umfasst:
mindestens einen saugseitigen Holmgurt (30), der sich in einer Längsrichtung des Windkraftanlagenrotorblatts (2) auf einer Saugseite des Windkraftanlagenrotorblatts (2) erstreckt,
mindestens einen druckseitigen Holmgurt (32), der sich in der Längsrichtung auf einer Druckseite des Windkraftanlagenrotorblatts (2) erstreckt, und
mindestens einen Schersteg (22, 24), der sich in der Längsrichtung zwischen dem mindestens einen saugseitigen Holmgurt (30) und dem mindestens einen druckseitigen Holmgurt (32) erstreckt,
**dadurch gekennzeichnet, dass** der Windkraftanlagenrotor (6) einen Durchmesser von mindestens 100 Metern aufweist, das Windkraftanlagenrotorblatt (2) einen Rotorblattspitzenabschnitt (14) aufweist, dessen Verhältnis r/R von einer radialen Position r in dem Windkraftanlagenrotor (6) zu einem Radius R des Windkraftanlagenrotors (6) 0,7 bis 1,00 beträgt,
ein Bereich des Rotorblattspitzenabschnitts (14) einen Querschnitt aufweist, der für den mindestens einen saugseitigen Holmgurt (30), den mindestens einen druckseitigen Holmgurt (32) und den mindestens einen Schersteg Platz bietet, und mindestens ein Teil des Bereichs des Rotorblattspitzenabschnitts (14) ein Blattprofil (50) aufweist, das alle der folgenden Bedingungen erfüllt:
(a) ein Rotorblattdickenverhältnis einer maximalen Rotorblattdicke tₘₐₓ zu einer Sehnenlänge C ist nicht kleiner als 19 % und nicht größer als 23 %,
(b) ein Xₜₘₐₓ/C von Xₜₘₐₓ zu C ist nicht kleiner als 0,28 und nicht größer als 0,32, wobei Xₜₘₐₓ ein Abstand in Sehnenrichtung zwischen einer Vorderkante und einer Position maximaler Dicke ist und C die Sehnenlänge ist, und
(c) ein Verhältnis t_{aft}/tₘₐₓ von t_{aft} zu der maximalen Rotorblattdicke tₘₐₓ ist nicht kleiner als 0,51 und nicht größer als 0,56, wobei t_{aft} eine Rotorblattdicke an einem Mittelpunkt auf einer Sehne (34) zwischen der Position maximaler Dicke und einer Hinterkante (20) ist,
wobei das Blattprofil (50) und der Querschnitt, der für den mindestens einen saugseitigen Holmgurt, den mindestens einen druckseitigen Holmgurt und den mindestens einen Schersteg Platz bietet, auf den gesamten Bereich von 0,80 bis 0,95 des Verhältnisses r/R angewandt werden.

2. Windkraftanlagenrotor (6) nach Anspruch 1, wobei das Profil der druckseitigen Oberfläche (26) des Blattprofils (50) einen Wendepunkt aufweist, wo das Differential d²y/dx² zweiter Ordnung in einem Bereich von x=0,60 bis 0,70 Null wird, wobei x ein Verhältnis X/C von X zu C ist, wobei X ein Abstand von der Vorderkante (18) in Richtung der Sehne (34) ist und C die Sehnenlänge C ist, und wobei y ein Verhältnis Y/C von Y zu C ist, wobei Y eine Positionskoordinate der druckseitigen Oberfläche (26) in einer Rotorblattdickenrichtung mit der Sehne (34) als Bezug ist und C die Länge der Sehne (34) an einer Position des Abstands in Sehnenrichtung X von der Vorderkante (18) ist.

3. Windkraftanlagenrotor (6) nach Anspruch 2,
wobei das Profil der druckseitigen Oberfläche (25) des Blattprofils (50) einen Wendepunkt aufweist, wo das Differential d²y/dx² zweiter Ordnung in einem Bereich von x=0,65 bis 0,70 Null wird.

4. Windkraftanlagenrotor (6) nach einem beliebigen der Ansprüche 1 bis 3,
wobei das Verhältnis t_{aft}/tₘₐₓ der Rotorblattdicke t_{aft} zu der maximalen Rotorblattdicke in dem Blattprofil (50) nicht kleiner als 0,52 und nicht größer als 0,54 ist.

5. Windkraftanlagenrotor (6) nach einem beliebigen der Ansprüche 2 bis 4,
wobei ein Verhältnis t₆₀/tₘₐₓ von t₆₀ zu tₘₐₓ nicht kleiner als 0,6 ist, wobei t₆₀ eine Rotorblattdicke ist, wenn x=0,60, und tₘₐₓ die maximale Rotorblattdicke ist, wobei x ein Verhältnis X/C von X zu C ist, wobei X ein Abstand in Sehnenrichtung von der Vorderkante (18) ist und C die Sehnenlänge C ist.

6. Windkraftanlagenrotor (6) nach Anspruch 5,
wobei das Verhältnis t₆₀/tₘₐₓ von t₆₀ zu tₘₐₓ nicht größer als 0,65 ist, wobei t₆₀ die Rotorblattdicke ist, wenn x=0,60, und tₘₐₓ die maximale Rotorblattdicke ist.

7. Windkraftanlagenrotor (6) nach einem beliebigen der Ansprüche 1 bis 6,
wobei ein Verhältnis t₅₅/tₘₐₓ von t₅₅ zu tₘₐₓ nicht kleiner als 0,7 ist, wobei t₅₅ eine Rotorblattdicke ist, wenn x=0,55, und tₘₐₓ die maximale Rotorblattdicke ist.

8. Windkraftanlage (100), umfassend:
den Windkraftanlagenrotor (6) nach einem beliebigen der Ansprüche 1 bis 7,
und
einen Generator (8), der dazu ausgebildet ist, Rotationsenergie des Windkraftanlagenrotors (6) in elektrische Energie umzuwandeln.

## Revendications

1. Rotor d'éolienne (6) comportant une pale d'éolienne (2), la pale d'éolienne (2) comportant :
au moins une semelle de longeron du côté dépression (30) s'étendant dans une direction longitudinale de la pale d'éolienne (2) sur un côté de dépression de la pale d'éolienne (2) ;
au moins une semelle de longeron du côté pression (32) s'étendant dans la direction longitudinale d'un côté de pression de la pale d'éolienne (2) ; et
au moins une âme de cisaillement (22, 24) s'étendant dans la direction longitudinale entre la au moins une semelle de longeron du côté dépression (30) et la au moins une semelle de longeron du côté pression (32),
**caractérisé en ce que** le rotor d'éolienne (6) fait au moins 100 mètres de diamètre, la pale d'éolienne (2) comprend une section de bout de pale (14) dont le rapport r/R d'une position radiale r dans le rotor d'éolienne (6) sur un rayon R du rotor d'éolienne (6) est de 0,7 à 1,00,
une zone de la section de bout de pale (14) a une section transversale qui reçoit la au moins une semelle de longeron du côté dépression (30), la au moins une semelle de longeron du côté pression (32) et la au moins une âme de cisaillement, et au moins une partie de la zone de la section de bout de pale (14) a une surface portante (50) satisfaisant toutes les conditions :
(a) un rapport d'épaisseur de pale d'une épaisseur maximum de pale tₘₐₓ sur une longueur de corde C n'est pas inférieur à 19% et pas supérieur à 23% ;
(b) un Xₜₘₐₓ/C de Xₜₘₐₓ sur C n'est pas inférieur à 0,28 et pas supérieur à 0,32 où Xₜₘₐₓ est une distance dans le sens de la corde entre un bord d'attaque et une position d'épaisseur maximum et C est la longueur de corde ; et
(c) un rapport t_{aft}/tₘₐₓ de t_{aft} sur l'épaisseur maximum de pale tₘₐₓ n'est pas inférieur à 0,51 et pas supérieur 0,56 où T_{aft} est une épaisseur de pale en un point médian sur une corde (34) entre la position d'épaisseur maximum et un bord de fuite (20),
dans lequel ladite surface portante (50) et ladite section transversale qui reçoit la au moins une semelle de longeron du côté dépression, la au moins une semelle de longeron du côté pression et la au moins une âme de cisaillement sont appliquées sur toute la plage de 0,80 à 0,95 du rapport r/R.

2. Rotor d'éolienne (6) selon revendication 1, dans lequel le profil de la surface du côté de pression (26) de la surface portante (50) a un point d'inflexion où la différentielle du second degré d²y/dx² devient nulle dans une plage de x = 0,60 à 0,70, où x est un rapport X/C de X sur C, X étant une distance dans le sens de la corde depuis le bord d'attaque (18), C étant la longueur de corde C et y est un rapport Y/C de Y sur C, Y étant une coordonnée de position de la surface du côté de pression (26) dans une direction d'épaisseur de pale avec une référence qui est la corde (34), C étant la longueur de corde (34) dans une position de la distance dans le sens de la corde (34) X depuis le bord d'attaque (18).

3. Rotor d'éolienne (6) selon revendication 2, dans lequel le profil de la surface du côté de pression (25) de la surface portante (50) a un point d'inflexion où la différentielle du second degré d²y/dx² devient nulle dans une plage de x = 0,65 à 0,70.

4. Rotor d'éolienne (6) selon l'une quelconque des revendications 1 à 3, dans lequel le rapport t_{aft}/tₘₐₓ de l'épaisseur de pale T_{aft} sur l'épaisseur maximum de pale tₘₐₓ dans la surface portante (50), n'est pas inférieur à 0,52 et pas supérieur à 0,54.

5. Rotor d'éolienne (6) selon l'une quelconque des revendications 2 à 4, dans lequel un rapport t₆₀/tₘₐₓ de t₆₀ sur tₘₐₓ n'est pas inférieur à 0,6, où t₆₀ est une épaisseur de pale quand x = 0,60 et tₘₐₓ est l'épaisseur maximum de pale, dans lequel x est un rapport X/C de X sur C, X étant une distance dans le sens de la corde depuis le bord d'attaque (18), C étant la longueur de corde C.

6. Rotor d'éolienne (6) selon la revendication 5, dans lequel le rapport t₆₀/tₘₐₓ de t₆₀ sur tₘₐₓ n'est pas supérieur à 0,65, où t₆₀ est l'épaisseur de pale quand x = 0,60 et tₘₐₓ est l'épaisseur maximum de pale.

7. Rotor d'éolienne (6) selon l'une quelconque des revendications 1 à 6, dans lequel un rapport t₅₅/tₘₐₓ de t₅₅ sur tₘₐₓ n'est pas inférieur à 0,7, où t₅₅ est une épaisseur de pale quand x = 0,55 et tₘₐₓ est l'épaisseur maximum de pale.

8. Eolienne (100) comportant :
le rotor d'éolienne (6) décrit dans l'une quelconque des revendications 1 à 7 ; et
une génératrice (8) configurée pour convertir une énergie de rotation du rotor d'éolienne (6) en énergie électrique.
